# EUROPÄISCHE PATENTSCHRIFT

(11) **EP 0 953 822 B1**
(45) Veröffentlichungstag und Bekanntmachung des Hinweises auf die Patenterteilung: **28.09.2005**
(21) Anmeldenummer: 99108039.1
(22) Anmeldetag: 23.04.1999
(51) Int. Cl.: G01B 21/08

(54) **Verfahren zur Charakerisierung lackierter Kunststoffoberflächen**
Method for assessing painted surfaces in synthetic material
Procédé pour la caractérisation de surfaces en matière synthétique enduites de peinture

(30) Priorität: 02.05.1998 DE 19819602
(43) Veröffentlichungstag der Anmeldung: 03.11.1999
(73) Patentinhaber: E.I. DU PONT DE NEMOURS AND COMPANY, Delaware 19898 (US)
(72) Erfinder: Rupieper, Paul, 42111 Wuppertal (DE); Cramm, Joachim, 42327 Wuppertal (DE)
(74) Vertreter: Gille Hrabal Struck Neidlein Prop Roos

(56) Entgegenhaltungen:
- DE-C- 19 605 520
- PATENT ABSTRACTS OF JAPAN vol. 016, no. 427 (P-1416), 8. September 1992 (1992-09-08) -& JP 04 147004 A (ICHIKOH IND LTD), 20. Mai 1992 (1992-05-20)

## Beschreibung

Die Erfindung betrifft ein Verfahren zur Charakterisierung lackierter Kunststoffoberflächen hinsichtlich ihrer visuellen Wirkung.

Die visuelle Wirkung einer lackierten Oberfläche ergibt sich durch das Zusammenspiel verschiedener optischer Eindrücke wie z.B. Glanz, Struktur und Farbton, der sich wiederum aus dem Farbort, der Helligkeit und der Farbstärke zusammensetzt. Im Falle von Mehrschichtlackierungen rührt der visuelle Eindruck im allgemeinen nicht nur von der äußeren Lackschicht her, sondern er wird auch aus einer oder mehreren darunter befindlichen Lackschichten beeinflußt. Eine Fülle von Methoden zur Charakterisierung einer lackierten Oberfläche, die geeignet sind deren visuelle Wirkung für das Auge des Betrachters zu beschreiben, ist bekannt. Beispiele sind die dem Fachmann bekannten nach optischen Prinzipien arbeitenden Verfahren zur Glanzmessung, zur Messung des Glanzschleiers (Haze), zur Messung des Farbtons (Farbmetrik) und zur Bestimmung von Oberflächenstrukturen. Eine wesentliche Einflußgröße hinsichtlich der visuellen Wirkung einer lackierten Oberfläche ist die Schichtdicke, in der die betreffende Lackschicht oder im Falle einer Mehrschichtlackierung eine oder mehrere Lackschichten appliziert worden sind.

Das menschliche Auge besitzt eine den visuellen Eindruck einer lackierten Fläche als Integral wahrnehmende Funktion. Die DE-C-196 05 520 beschreibt ein Verfahren zur Bestimmung der visuellen Wirkung von Lackierungen. Dieses Verfahren besteht darin, daß eine oder mehrere Lackschichten auf die Oberfläche eines ebenen Substrats appliziert und getrocknet oder gehärtet werden, wobei eine der Lackschichten mit einem Schichtdickegradienten appliziert wird, und auf der so erhaltenen lackierten Oberfläche anschließend an vollflächig in Form eines gitterförmigen Rasters verteilten Meßpunkten jeweils eine oder mehrere den visuellen Eindruck beeinflussende Oberflächeneigenschaften mittels eines oder mehrerer optischer Meßverfahren, sowie die jeweilige Dicke der keilförmigen Lackschicht vermessen werden. Als Substrate mit einer ebenen Oberfläche werden dabei bevorzugt Prüfbleche bzw. Prüfplatten verwendet. Diese bestehen bevorzugt aus Metall. Eine Anwendung des aus DE-C-196 05 520 bekannten Verfahrens auf lackierte Kunststoffoberflächen stößt an durch Kunststoffsubstrate festgelegte Grenzen. Zur zerstörungsfreien Schichtdickebestimmung von Lackschichten auf Kunststoffuntergründen ist man auf aufwendige und komplizierte Meßmethoden angewiesen, beispielsweise das nur nach Kalibrierung an einer Lackschicht desselben Typs bekannter Dicke durchführbare Wärmewellen-Verfahren oder das in seiner Anwendung auf Klarlackschichten beschränkte Lichtschnittverfahren.

Es besteht die Aufgabe ein rationelles Verfahren zur Charakterisierung lackierter Kunststoffoberflächen hinsichtlich ihrer visuellen Wirkung in Abhängigkeit von der Schichtdicke einer Lackschicht bereitzustellen und insbesondere das aus DE-C-196 05 520 bekannte Verfahren hinsichtlich der Anwendung auf lackierte Kunststoffoberflächen weiterzuentwickeln. Insbesondere sollen die Beschränkungen, die sich im Zusammenhang mit der Schichtdickemessung von Lackschichten auf Kunststoffsubstraten ergeben, mit dem Verfahren überwunden werden. Das Verfahren soll reproduzierbare, gut mit der integrierenden Funktion des menschlichen Auges korrelierende Meßergebnisse liefern und es soll die Schichtdickeabhängkeit möglichst eindrucksvoll deutlich machen. Das Verfahren soll eingesetzt werden können im Bereich der Lackentwicklung, der Qualitätskontrolle in der Lackfertigung, bei der Entwicklung sowie auch der Überwachung von Lackierprozessen, was sowohl den Applikations- als auch den Trocknungsprozeß umfaßt.

Es hat sich gezeigt, daß diese Aufgabe durch das einen Gegenstand der Erfindung bildende Verfahren zur Bestimmung der visuellen Wirkung von Lackierungen auf Kunststoffoberflächen gelöst wird, wobei eine oder mehrere aufeinanderfolgende Lackschichten jeweils auf die gesamte Oberfläche eines aus einer mit einer Probeplatte aus ferromagnetischem Metall verbundenen Probeplatte aus Kunststoff bestehenden Substrats appliziert und getrocknet oder gehärtet werden, wobei die beiden Probeplatten in einer eine gemeinsame Ebene oder parallel zueinander angeordnete, gegebenenfalls einander teilweise verdeckende Ebenen ausbildenden Weise miteinander verbunden sind, eine der Lackschichten in Form eines Keils mit einem Schichtdickegradienten appliziert wird, und auf der so erhaltenen lackierten Substratoberfläche zumindest an der Probeplatte aus Kunststoff anschließend an vollflächig in Form eines gitterförmigen Rasters verteilten Meßpunkten jeweils eine oder mehrere den visuellen Eindruck beeinflussende Oberflächeneigenschaften mittels eines oder mehrerer optischer Meßverfahren, sowie ausschließlich an der Probeplatte aus ferromagnetischem Metall die jeweilige Dicke der keilförmigen Lackschicht mittels üblicher magnetischer oder magnetisch-induktiv arbeitender Verfahren vermessen werden.

Insbesondere werden die Schichtdicken mittels einer zerstörungsfreien, nur auf metallischen Untergründen anwendbaren Schichtdickenmeßmethode vermessen.

Das Verfahren kann zur Bestimmung der visuellen Wirkung von Lackierungen allein auf Kunststoffoberflächen eingesetzt werden. In diesem Falle genügt es die Messung der optischen Eigenschaften allein auf der Kunststoffplatte durchzuführen. Bei Messung der optischen Eigenschaften auch auf der Metallplatte lassen sich insbesondere visuelle Bewertungen von Oberflächen von in Mischbauweise aus Kunststoff- und Metallteilen zusammengesetzten Substraten vornehmen.

Bevorzugt werden die optischen Messungen anhand eines gitterförmigen Rasters durchgeführt, das vollflächig über die lackierte Oberfläche der Probeplatte aus Kunststoff verteilt ist; für die Schichtdickemessung gilt das gleiche mit Bezug auf die lackierte Oberfläche der Probeplatte aus Metall.

Als Substrat mit einer ebenen, insbesondere glatten, nicht gebogenen Oberfläche wird beispielsweise eine rechteckige mit einer ebenfalls rechteckigen Probeplatte aus Metall verbundene Probeplatte aus Kunststoff, die in einer eine gemeinsame Ebene oder parallel zueinander angeordnete, gegebenenfalls einander teilweise verdeckende Ebenen ausbildenden Weise miteinander verbunden sind, verwendet. Insbesondere geeignet zur Herstellung der aus einer mit einer Probeplatte aus Metall verbundenen Probeplatte aus Kunststoff bestehenden Substrate sind die in der Lackindustrie üblichen rechteckigen Probeplatten aus Metall und Kunststoff beliebiger Abmessungen, beispielsweise in der Größenordnung von 150 bis 300 mm mal 600 mm. Eine der oder beide Probeplatten können dabei an ihrer zu beschichtenden Oberfläche eine ein- oder mehrschichtige Vorbeschichtung aufweisen. Die beiden Probeplatten können also unterschiedlich oder gleichartig beschaffene, zu beschichtende Oberflächen aufweisen. Bei den Probeplatten aus Metall handelt es sich bevorzugt um solche aus Stahl. Beispielsweise besitzen die beiden rechteckigen Probeplatten zumindest eine übereinstimmende Kantenlänge, beispielsweise indem sie ein gleiches Format aufweisen oder indem das Format der einen Probeplatte beispielsweise dem doppelten Format der anderen Probeplatte entspricht. Die Probeplatte aus Metall und die Probeplatte aus Kunststoff können an ihren nicht zu beschichtenden Rückseiten miteinander verbunden werden, ohne sich zu verdecken. Bevorzugt werden sie dazu beispielsweise über ihre Kanten beispielsweise gleicher Länge miteinander verbunden und ergeben auf diese Weise ein Substrat mit eine gemeinsame Ebene ausbildenden Oberflächen, d.h. die Probeplatte aus Metall und die Probeplatte aus Kunststoff befinden sich in paralleler Anordnung. Die beiden Probeplatten aus Metall und aus Kunststoff können aber auch so zu einem Substrat zusammengefügt werden, daß sie sich teilweise verdecken und ihre zu beschichtenden Oberflächen dabei parallel zueinander angeordnete Ebenen ausbilden. Sie werden dann nicht Kante an Kante, sondern unter teilweiser Überlappung miteinander verbunden. Dabei kann die Verbindung an den nicht zu beschichtenden Rückseiten der beiden Probeplatten vorgenommen werden oder die eine Probeplatte wird auf der anderen Probeplatte angebracht. In diesem Fall besitzen die Probeplatten bevorzugt unterschiedlich große Flächen, so daß die kleinere Probeplatte auf der größeren angebracht werden kann; beispielsweise wird eine Probeplatte aus Kunststoff auf einer größeren Probeplatte aus Metall angebracht. Bevorzugt bilden sie dabei eine gemeinsame äußere Kante, beispielsweise gleicher Länge, aus. Die Art der Verbindung beider Probeplatten ist frei wählbar, bevorzugt erfolgt die Verbindung der beiden Probeplatten unter Verwendung von Klebeband an den nicht zu beschichtenden Rückseiten oder bei überlappender Verbindung durch Aufkleben einer Probeplatte auf die andere, beispielsweise unter Verwendung von doppelseitigem Klebeband. Dabei kann das doppelseitige Klebeband die beiden Probeplatten flächig oder nur teilflächig, beispielsweise streifenförmig verbinden.

Das erfindungsgemäße Verfahren ist auf die Lackierung beliebiger Kunststoffsubstrate anwendbar. Eine Einschränkung hinsichtlich des Kunststoffes besteht nicht. Geeignete Beispiele für Kunststoffe sind Polypropylen, Polyamid, Polycarbonat und ABS-Kunststoffe.

Erfindungsgemäß sind Platten aus ferromagnetischen Metallen, wie z.B. Stahl, besonders geeignet.

Das erfindungsgemäße Verfahren unterliegt keinerlei Beschränkung hinsichtlich der Art der Lacke bzw. Lackschichten. So können die zu charakterisierenden Oberflächen Ein- oder Mehrschichtlackierungen sein, zu deren Herstellung pigmenthaltige und/oder pigmentfreie Überzugsmittel eingesetzt werden. Beispiele sind Klarlacke, farb- und/oder effektgebende Basislacke, Decklacke und Primer. Zur Erzeugung der Lackschichten können lösemittelfreie, lösemittelhaltige oder wäßrige Flüssiglacke oder Pulverlacke eingesetzt werden. Die Überzugsmittel können Ein- oder Mehrkomponentenlacke sein, dabei kann es sich um physikalisch trocknende oder chemisch vernetzende Systeme handeln. Bei den chemisch vernetzenden Systemen kann die Vernetzung thermisch oder durch energiereiche Strahlung induzierbar sein. Im Zusammenhang mit der vorliegenden Erfindung kann Lacktrocknung physikalische Trocknung oder chemische Vernetzung einer Lackschicht bei Umgebungs- oder erhöhter Temperatur, beispielsweise durch Einbrennen oder Einwirkung von Wärmestrahlung (IR-Strahlung), oder auch durch energiereiche Strahlung, beispielsweise UV- oder Elektronenstrahlung, induzierte chemische Vernetzung einer Lackschicht bedeuten.

Der Lack bzw. im Falle von Mehrschichtlackierungen die Lacke werden jeweils auf die gesamte Substratoberfläche, also sowohl auf den metallischen als auch auf den Kunststoffteil der Substratoberfläche aufgetragen. Die einzelnen Beschichtungsvorgänge erfolgen dabei jeweils ohne Unterbrechung, d.h. Kunststoff- und Metalloberfläche des Substrats werden beim jeweiligen Beschichtungsvorgang in gleicher Weise durchgehend unter Konstanthaltung der Verfahrensparameter für die Beschichtung lackiert. Hierdurch wird gewährleistet, daß die Schichtdicke(n) der einzelnen Lackschicht(en) an jeweils korrespondierenden Positionen auf den beiden miteinander verbundenen Probeplatten übereinstimmen. In Sonderfällen, bei denen sich eine Abweichung zwischen den auf dem Kunststoff- und auf dem Metallteil bzw. an korrespondierenden Positionen des Kunststoff- und des Metallteils des Substrats erzielten Schichtdicken ergibt, kann so vorgegangen werden, daß das erfindungsgemäße Verfahren unter Berücksichtigung eines entsprechenden, sich aus einer zuvor erstellten Eichfunktion ergebenden Korrekturfaktors für die Schichtdicke durchgeführt wird.

Handelt es sich um eine Einschichtlackierung, deren Oberfläche charakterisiert werden soll, so wird der betreffende Lack mit einem Schichtdickegradienten, also in Form eines Keils mittels Spritzapplikation aufgetragen und getrocknet. Der Schichtdickegradient kann dabei einen weiten Bereich überstreichen, beispielsweise einen Bereich zwischen über 0 und 100 µm. Die Applikation und/oder die anschließende Trocknung können so durchgeführt werden, daß sich das Substrat währenddessen in einer waagerechten Position befindet. Bevorzugt jedoch finden Applikation oder Trocknung, besonders bevorzugt Applikation und Trocknung insbesondere der keilförmig applizierten Lackschicht, an einem außerhalb der Waagerechten befindlichen, besonders bevorzugt senkrecht ausgerichteten Substrat statt. Dabei befindet sich der Bereich höchster Schichtdicke der keilförmig applizierten Lackschicht bevorzugt am unteren, d.h. erdnäheren Ende. Bevorzugt erfolgt die Applikation zur Gewährleistung einer Reproduzierbarkeit mittels eines üblichen Automaten, wie er beispielsweise bekannt ist aus der EP-B-0 350 891. Beispielsweise kann der Schichtdickegradient bevorzugt so erzeugt werden, daß die betreffende Lackschicht in mehreren beispielsweise zwei oder mehreren Spritzzyklen appliziert wird, wobei die Spritzzonen sich nur teilweise überdecken.

Beim erfindungsgemäßen Verfahren ist es beliebig, welche Schicht keilförmig (gradientenförmig) appliziert wird. Zweckmäßig wird die Schicht keilförmig appliziert, an deren Auswirkung auf den visuellen Gesamteindruck man interessiert ist.

Im Falle von Mehrschichtlackierungen, beispielsweise den im Bereich der Kraftfahrzeuglackierung bekannten Basislack/Klarlack-Zweischichtlackierungen, insbesondere Basislack/Klarlack-Zweischichteffektlackierungen gelten im Prinzip die gleichen, schon im vorstehenden Absatz gemachten Ausführungen, wobei eine der die Mehrschichtlackierung bildenden Lackschichten mit einem Schichtdickegradienten appliziert wird. Beispielsweise kann die farb- und/oder effektgebende Basislackschicht oder die Klarlackschicht einer Basislack/Klarlack-Zweischichtlackierung mit einem Schichtdickegradienten appliziert werden.

Beim erfindungsgemäßen Verfahren werden beim Auftrag der gradientenförmig ausgebildeten interessierenden Schicht bevorzugt eine oder mehrere Zonen auf dem metallischen Teil des Substrats ausgespart. Diese Zonen können beispielsweise streifenförmig, beispielsweise am Rand des metallischen Substratteils ausgebildet sein. Dies kann beispielsweise so erfolgen, daß beim Auftrag der gradientenförmig ausgebildeten Schicht die freibleibenden Zonen abgeklebt werden, beispielsweise durch streifenförmige Klebebänder. Die übrigen Schichten werden in diesen Zonen in gleicher Weise wie auf dem gesamten Substrat appliziert. In der Praxis können hierzu beispielsweise die Aufkleber vor Auftrag einer jeweiligen weiteren Schicht entfernt werden. Auf diese Weise wird es ermöglicht, die Schichtdicke der gradientenförmig aufgetragenen Schicht an den einzelnen Meßpunkten durch Vergleich mit den ausgesparten Zonen additiv zu ermitteln.

Das erfindungsgemäße Verfahren wird so durchgeführt, daß nach sorgfältiger Kalibrierung des Meßsystems das lackierte Substrat hinsichtlich der betreffenden den visuellen Eindruck beeinflussenden Oberflächeneigenschaft n-fach in Form eines sich über die gesamte Oberfläche der Probeplatte aus Kunststoff erstreckenden aus n Meßpunkten bestehenden Gitters mittels optischer Meßverfahren vermessen wird, wobei für jeden Meßpunkt auch die Trockenschichtdicke der betreffenden keilförmigen Lackschicht an einer korrespondierenden Position der Probeplatte aus Metall gemessen wird. Bevorzugt beträgt die Anzahl der Meßpunkte n = etwa 400 bis etwa 1000. Die Schichtdicke wird dabei mit nur auf metallischen Substraten durchführbaren zerstörungsfreien Methoden ermittelt. Dabei handelt es sich insbesondere um die dem Fachmann für diesen Zweck bekannten Schichtdickemeßverfahren, wie z.B. kapazitive oder Wirbelstromverfahren, besonders bevorzugt aber um magnetische oder magnetisch-induktiv arbeitende Schichtdickemeßverfahren (wie beispielsweise beschrieben in H. Kittel, Lehrbuch der Lacke und Beschichtungen, Band 8/1, Verlag W.A. Colomb, 1980, Seite 140 ff. und Glasurit-Handbuch Lacke und Farben, Curt R. Vincentz Verlag, München, 1984, Seite 292 ff.), bevorzugt wird die Schichtdicke auf den bevorzugten Probeplatten aus Stahl mit magnetisch-induktiven Meßverfahren bestimmt. Beispielsweise wird beim erfindungsgemäßen Verfahren bevorzugt so vorgegangen, daß mehrere Messungen entlang einer Linie mit gleicher Schichtdicke der betreffenden Lackschicht vorgenommen werden. Beispielsweise kann beginnend bei niedriger Schichtdicke und sich zu höchster Schichtdicke hin fortsetzend jeweils bevorzugt entlang äquidistanter Linien gemessen werden. Dabei erfaßt jede einzelne Linie gleiche Schichtdicken. Die verschiedenen äquidistant angeordneten Linien sind unterschiedlichen Schichtdicken zugeordnet. Beispielsweise wird ein Meßgitter aus insgesamt etwa 400 bis etwa 1000 Meßwerten pro Probeplatte erfaßt. Bei 500 Meßpunkten können beispielsweise entlang 20 verschiedener Linien gleicher Schichtdicke jeweils 25 Meßwerte aufgenommen werden. Dabei werden die Abstände und Anzahl der Linien sowie der Meßpunkte so gelegt, daß bevorzugt mindestens etwa ein Meßpunkt pro Quadratzentimeter Lackoberfläche gemessen wird.

Das erfindungsgemäße Verfahren erlaubt es insbesondere, die an der Probeplatte aus Kunststoff erhaltenen optischen Meßpunkte in ein Korrelationsdiagramm zur jeweils zugehörigen Dicke der keilförmigen Lackschicht einzutragen. Zur Verwertung können die erhaltenen Meßwerte beispielsweise von der Ordinate, die zugehörigen Schichtdicken gegebenenfalls unter Berücksichtigung des vorstehend beschriebenen Korrekturfaktors von der Abszisse eines Korrelationsdiagramms abgetragen werden. Man erhält für die zu charakterisierende Eigenschaft der lackierten Kunststoffoberfläche ein unverwechselbares Muster aus n Punkten, das vergleichbar einem Fingerabdruck ist. Dabei bedeutet n eine beliebige Zahl, die je nach der gewünschten Meßgenauigkeit gewählt wird. Man erhält somit eine Bewertungsmöglichkeit der visuellen Eigenschaften einer lackierten Kunststoffoberfläche. Insbesondere läßt sich bewerten, ob und wie die visuellen Eigenschaften von definierten Applikations- und Trocknungsbedingungen sowie einer definierten Zusammensetzung eines oder mehrerer Lacke, die zur Lackierung der Kunststoffoberfläche verwendet werden, abhängen.

Die visuell erfaßbaren Eigenschaften einer lackierten Oberfläche werden beeinflußt durch das komplexe Zusammenspiel einer Fülle von variierbaren Parametern des Lackmaterials, der Lackapplikation und der Lacktrocknung. Dieses Zusammenspiel beeinflußt beispielsweise das für das Auge wahrnehmbare Auftreten und die Ausprägung solcher Phänomene wie Farbton, Helligkeits- und/oder Farbflop (optische Anisotropie), Verlauf, Ablaufneigung, Orangenhautbildung, Mikrostruktur, Spritznebelaufnahmevermögen, Anlöseeffekte, Wolkigkeit bei Effektlackierungen, Deckfähigkeit, Glanz, Glanzschleier, Phänomene, die sich letztlich im visuellen Eindruck einer lackierten Oberfläche niederschlagen. Jede dieser Eigenschaften kann die Grundlage für die beim erfindungsgemäßen Verfahren durchzuführenden Messungen bilden.

Beispiele für visuell erfaßbare und meßbare Eigenschaften sind Glanz, Glanzschleier (Haze), Oberflächenstruktur mit lang- und kurzwelligem Anteil, Farbton, beispielsweise Farbort, Farbstärke, Helligkeit.

Beispiele für im Rahmen des erfindungsgemäßen Verfahrens einsetzbare Verfahren zur Messung des Glanzes lackierter Kunststoffoberflächen sind die üblichen, dem Fachmann bekannten, auf dem Prinzip der Lichtreflexion basierenden goniophotometrischen Verfahren, wie beispielsweise beschrieben in H. Kittel, Lehrbuch der Lacke und Beschichtungen, Band 8/1, Verlag W.A. Colomb, 1980, Seite 240 ff., Glasurit-Handbuch Lacke und Farben, Curt R. Vincentz Verlag, München, 1984, Seite 239 ff. und DIN 67530). Im Rahmen des erfindungsgemäßen Verfahrens bevorzugt eingesetzte Glanzmeßgeräte sind handelsübliche Geräte, wie beispielsweise die von der Firma BYK-Gardner vertriebenen Geräte Microgloss^{R} und Micro-Tri-Gloss^{R}.

Beispiele für im Rahmen des erfindungsgemäßen Verfahrens einsetzbare Verfahren zur Messung des Glanzschleiers (Haze) lackierter Kunststoffoberflächen sind die üblichen, dem Fachmann bekannten, ebenfalls auf dem Prinzip der Lichtreflexion basierenden goniophotometrischen Verfahren (wie beispielsweise beschrieben in Glasurit-Handbuch Lacke und Farben, Curt R. Vincentz Verlag, München, 1984, Seite 240). Es können die handelsüblichen, dem Fachmann geläufigen Meßgeräte eingesetzt werden. Ein im Rahmen des erfindungsgemäßen Verfahrens bevorzugt eingesetztes Meßgerät zur Bestimmung des Glanzschleiers ist beispielsweise das von der Firma BYK-Gardner vertriebene Gerät Microhaze^{R}.

Beispiele für im Rahmen des erfindungsgemäßen Verfahrens einsetzbare Verfahren zur Farbmetrik lackierter Kunststoffoberflächen sind die üblichen, dem Fachmann bekannten Verfahren zur Bestimmung der Reflexionskurven von Licht, woraus sich z.B. die im CIELAB-System gebräuchlichen farbmetrischen Größen L*, a* und b* errechnen lassen (wie beispielsweise beschrieben in H. Kittel, Lehrbuch der Lacke und Beschichtungen, Band 8/1, Verlag W.A. Colomb, 1980, Seite 252 ff., Glasurit-Handbuch Lacke und Farben, Curt R. Vincentz Verlag, München, 1984, Seite 220 ff.). Es können alle üblichen, dem Fachmann geläufigen Meßgeräte verwendet werden. Ein im Rahmen des erfindungsgemäßen Verfahrens beispielsweise bevorzugt eingesetztes farbmetrisches Meßgerät ist das von der Firma X-Rite vertriebene Gerät X-Rite MA 58, ein beispielsweise bevorzugt eingesetztes Meßgerät zur Bestimmung der Helligkeit ist das von der Firma BYK-Gardner vertriebene Gerät Micrometallic^{R}.

Ein Beispiel für ein im Rahmen des erfindungsgemäßen Verfahrens einsetzbares Verfahren zur Bestimmung des langwelligen und des kurzwelligen Anteils der Oberflächenstruktur lackierter Kunststoffoberflächen ist das dem Fachmann bekannte auf dem Prinzip der durch Oberflächenstrukturen modulierten Lichreflexion basierende goniophotometrische Verfahren. Es können alle üblichen, dem Fachmann geläufigen Meßgeräte verwendet werden. Beispielsweise wird beim erfindungsgemäßen Verfahren bevorzugt das von der Firma BYK-Gardner vertriebene Meßgerät Wave-scan^{R} (vgl. European Coatings Journal Nr. 1-2 (1995), Seite 32-35) eingesetzt.

Beim erfindungsgemäßen Verfahren ist es bevorzugt, die in Abhängigkeit vom Beleuchtungs- und/oder Betrachtungswinkel zu unterschiedlichen Meßergebnissen führenden Messungen, an solchen Substraten durchzuführen, die sich bei Lackapplikation und/oder -trocknung, bevorzugt bei Applikation und Trocknung insbesondere der keilförmig applizierten Lackschicht, außerhalb der waagerechten Position, bevorzugt in einer senkrechten Position, befanden. Es ist besonders bevorzugt, wenn sich der Bereich höchster Schichtdicke der als Keil applizierten Lackschicht während der Lackapplikation und-trocknung dabei am unteren, d.h erdnäheren Ende des Substrats befand. Diese Verfahrensweise führt zu besonders aussagekräftigen und differenzierenden Korrelationsdiagrammen. Viele der optischen Messungen werden mit Meßgeräten durchgeführt, die einen Beleuchtungsstrahl aussenden und die Messung beispielsweise am reflektierten Strahl ausführen; diese Geräte haben daher eine Beleuchtungsrichtung, von der her beleuchtet wird, und eine dazu entgegengesetzte Betrachtungsrichtung (Meßrichtung). Bei der vorstehend genannten bevorzugten Ausführungsform ist es besonders bevorzugt, wenn die Beleuchtungs- und/oder Betrachtungsrichtung ungeachtet des für die Messung gewählten Beleuchtungs- und/oder Betrachtungswinkels am Substrat in Richtung oder um 180 Grad entgegengesetzt einer Achse des Substrats verläuft. Bevorzugt wird hierzu die Achse gewählt, die bei Lackapplikation und/oder -trocknung, bevorzugt während Lackapplikation und -trocknung, auf einem außerhalb der Waagerechten, bevorzugt in der Senkrechten befindlichen Substrat, von oben nach unten verlief. Es hängt von der Art des zu untersuchenden Lackes ab, ob es dabei bevorzugt ist, in Richtung der Achse oder gegen die Achse zu beleuchten.

Das erfindungsgemäße Verfahren ist auch im Bereich der Lack- und Bindemittelentwicklung anwendbar. Beispielsweise kann der Einfluß der Lackzusammensetzung auf die visuelle Wirkung einer unter Verwendung des Lacks bei Einhaltung definierter Applikations- und Trocknungsbedingungen erhaltenen Ein- oder Mehrschichtlackierung auf Kunststoffoberflächen ermittelt werden. Beispielsweise kann die visuelle Wirkung einer lackierten Kunststoffoberfläche von Art und Mengenanteil der Bindemittel im Lack, von der Art und Menge der flüchtigen Stoffe wie z.B. Lösemittel, von Art und Menge der Additive sowie von Art und Menge der Pigmente und Füllstoffe abhängen. Das erfindungsgemäße Verfahren kann mit Erfolg auch schon in der Stylingphase eingesetzt werden, z.B. bei der Formulierung neuer, bisher unbekannter (Effekt)farbtöne. Auch die Stabilität eines Lacks über einen längeren Zeitraum gegebenenfalls unter speziellen Bedingungen, beispielsweise dessen Lager- und Ringleitungsstabilität, oder die Eignung eines Lacks für einen fest vorgegebenen Lackierungsprozeß kann mit dem erfindungsgemäßen Verfahren erfolgreich überprüft werden. Wenn sich beispielsweise im Falle eines lager- oder ringleitungsstabilen Lacks auch über einen längeren Zeitraum keine Veränderung im Effekt, im Farbton oder in der Oberflächenstruktur von mit ihm lackierten Kunststoffoberflächen ergibt, so zeigt sich das als unverändertes Muster in den entsprechenden nach dem erfindungsgemäßen Verfahren erzeugten Korrelationsdiagrammen.

Das erfindungsgemäße Verfahren kann auch in der Qualitätskontrolle bei der Lackfertigung eingesetzt werden, beispielsweise zur Farbtonfreigabe. Dabei werden unter definierten Bedingungen Substrate mit dem zu prüfenden Lack hergestellt und die entsprechenden Korrelationsdiagramme werden mit dem Soll-Diagramm auf Übereinstimmung als Freigabekriterium verglichen. Abweichungen des Lackmaterials können schnell und sicher erkannt und durch geeignete Einflußnahme auf den Fertigungsprozeß korrigiert werden. Dabei erkennt man mittels der Korrelationsdiagramme oftmals nicht nur die Abweichung an sich, sondern auch deren Ursache.

Weiterhin ist das erfindungsgemäße Verfahren anwendbar bei der Entwicklung von Lackierprozessen, was sowohl den Prozeß der Lackapplikation als auch den Lacktrocknungsprozeß einschließt. Beispielsweise kann unter Verwendung jeweils ein und desselben bzw. im Falle von Mehrschichtlackierungen derselben Lacke und bei Konstanthaltung aller Trocknungsparameter der Einfluß von Applikationsparametern auf die visuelle Wirkung der lackierten Kunststoffoberfläche untersucht werden. Es können auch die Applikationsparameter konstant gehalten werden und die Trocknungsparameter variiert werden. Beispiele für variierbare Applikationsparameter sind Luftfeuchtigkeit, Temperatur, Art und Betriebsweise des Sprühorgans, Höhe der Spannung bei elektrostatischer Applikation, Art und Schichtdicke der anderen, nicht als Keil lackierten Lackschichten einer Mehrschichtlackierung. Beispiele für variierbare Trocknungsparameter sind Ablüftbedingungen wie Ablüfttemperatur und dauer, Temperatur/Zeit-Aufheizkurve des Trockenofens, Trocknungstemperatur bzw. Objekttemperatur als solche, Einbrenndauer, Luftfeuchtigkeit. Beim erfindungsgemäßen Verfahren wird beispielsweise so vorgegangen, daß nur ein Applikations- bzw. Trocknungsparameter variiert wird, während die anderen Applikations- bzw. Trocknungsparameter konstant gehalten werden. Das bzw. die nach dem erfindungsgemäßen Verfahren erhaltenen Korrelationsdiagramme repräsentieren jeweils den Einfluß der Applikations- und/oder Trocknungsparameter auf die visuelle Wirkung einer lackierten Kunststoffoberfläche.

Beispielsweise kann das optimale Verarbeitungsfenster eines definierten Lacks hinsichtlich Luftfeuchtigkeit und -temperatur bei dessen Applikation bestimmt werden, in dem der visuelle Eindruck und damit das nach dem erfindungsgemäßen Verfahren erhaltene Korrelationsdiagramm konstant ist, d.h. es besteht die Möglichkeit einen sicheren Verarbeitungsbereich für einen gegebenen Lack zu definieren.

Dementsprechend kann das erfindungsgemäße Verfahren auch mit Erfolg bei der Überwachung von Lackierprozessen eingesetzt werden, was sowohl die Überwachung der Lackapplikation als auch der Lacktrocknung einschließt. Ist beispielsweise sichergestellt, daß das eingesetzte Lackmaterial den Spezifikationen entspricht (was wie vorstehend erwähnt ebenfalls mittels des erfindungsgemäßen Verfahrens kontrolliert werden kann), so können Abweichungen vom vorgeschriebenen Lackierprozeß (wie beispielsweise die Nichteinhaltung vorgeschriebener Applikations- und/oder Trocknungsparameter) durch Anwendung des erfindungsgemäßen Verfahrens schnell erkannt und korrigiert werden. Auch hier gilt, daß die Korrelationsdiagramme oftmals nicht nur die Abweichung an sich erkennen lassen, sondern auch deren Ursache.

Ein besonderer Wert des erfindungsgemäßen Verfahrens ergibt sich aus der Möglichkeit, das Zusammenwirken von Lackierprozeß und Lackformulierung zu studieren. Beispielsweise kann der Wunsch bestehen, in unterschiedlichen Lackieranlagen mit unterschiedlichen fest vorgegebenen Applikations- und/oder Trocknungsparametern lackierte Kunststoffoberflächen mit gleichem visuellen Eindruck herzustellen. Durch Erstellen des oder der geeigneten Korrelationsdiagramme nach dem erfindungsgemäßen Verfahren kann so beispielsweise ein geeignetes Additivkonzept für den Lack gefunden werden, das es gestattet im Prinzip jeweils den gleichen Lack einzusetzen, diesen jedoch jeweils mit den geeigneten Additiven auf die speziellen Bedingungen unterschiedlicher Lackieranlagen anzupassen. So wird es möglich, daß in verschiedenen Lackieranlagen lackierte Kunststoffteile den gleichen visuellen Eindruck aufweisen, was sich im Korrelationsdiagramm in einem identischen Muster widerspiegelt.

Eine bevorzugte Ausführungsform der vorliegenden Erfindung besteht in der Anwendung des Verfahrens auf die Bestimmung der visuellen Wirkung von Lackierungen auf Oberflächen von aus Kunststoff- und aus Metallteilen in Mischbauweise aufgebauten Substraten. Dabei werden eine oder mehrere aufeinanderfolgende Lackschichten jeweils auf die gesamte Oberfläche eines aus einer mit einer Probeplatte aus Metall verbundenen Probeplatte aus Kunststoff bestehenden Substrats appliziert und getrocknet oder gehärtet, wobei die beiden Probeplatten in einer eine gemeinsame Ebene oder parallel zueinander angeordnete, gegebenenfalls einander teilweise verdeckende Ebenen ausbildenden Weise miteinander verbunden sind, eine der Lackschichten in Form eines Keils mit einem Schichtdickegradienten appliziert wird, und auf der so erhaltenen lackierten Substratoberfläche sowohl an der Probeplatte aus Kunststoff als auch an der Probeplatte aus Metall anschließend an jeweils vollflächig in Form eines gitterförmigen Rasters verteilten Meßpunkten jeweils eine oder mehrere den visuellen Eindruck beeinflussende Oberflächeneigenschaften mittels eines oder mehrerer optischer Meßverfahren, sowie ausschließlich an der Probeplatte aus Metall die jeweilige Dicke der keilförmigen Lackschicht vermessen werden.

Das erfindungsgemäße Verfahren wird im Fall dieser Ausführungsform so durchgeführt, daß nach sorgfältiger Kalibrierung des Meßsystems das lackierte Substrat hinsichtlich der betreffenden den visuellen Eindruck beeinflussenden Oberflächeneigenschaft in Form eines sich über die gesamte, insbesondere rechteckige Oberfläche der Probeplatte aus Kunststoff und analog dazu ebenfalls über die gesamte, das beispielsweise gleiche Rechteckformat aufweisende Oberfläche der Probeplatte aus Metall erstreckenden, aus im Fall der Probeplatte aus Kunststoff aus n und im Fall der Probeplatte aus Metall aus m Meßpunkten bestehenden Gitters mittels optischer Meßverfahren vermessen wird, wobei für jeden Meßpunkt auch die Trockenschichtdicke der betreffenden keilförmigen Lackschicht an einer jeweiligen korrespondierenden Position der Probeplatte aus Metall gemessen wird. Dabei ist m, wie auch bereits für n definiert, eine beliebige Zahl, die je nach der gewünschten Meßgenauigkeit gewählt wird. Dabei können n und m gleiche oder verschiedene Werte annehmen. Der besondere Wert dieser Ausführungsform des erfindungsgemäßen Verfahrens besteht darin, daß sowohl die n an der Probeplatte aus Kunststoff als auch die m an der Probeplatte aus Metall erhaltenen optischen Meßpunkte in ein Korrelationsdiagramm zur jeweils zugehörigen Dicke der keilförmigen Lackschicht eingetragen werden können. Zur Verwertung können die erhaltenen optischen n plus m Meßwerte beispielsweise von der Ordinate, die zugehörigen Schichtdicken gegebenenfalls unter Berücksichtigung des vorstehend beschriebenen Korrekturfaktors von der Abszisse eines Korrelationsdiagramms abgetragen werden. Dabei kann bevorzugt so vorgegangen werden, daß die n an der Probeplatte aus Kunststoff erhaltenen optischen Meßwerte mit einer anderen Farbe oder unter Verwendung eines anderen Symbols als die m an der Probeplatte aus Metall erhaltenen optischen Meßwerte in das Korrelationsdiagramm eingetragen werden. Man erhält so für die zu charakterisierende Eigenschaft der lackierten Substratoberfläche zwei unverwechselbare Muster aus n bzw. m Punkten, die jeweils vergleichbar einem Fingerabdruck sind. Auf diese Weise ergibt sich eine hervorragende Bewertungsmöglichkeit der visuellen Eigenschaften eines lackierten, in Mischbauweise aus Kunststoff- und Metallteilen aufgebauten Substrats. Insbesondere läßt sich dabei der Grad der Übereinstimmung der visuellen Eigenschaften der beiden verschiedenen Oberflächen bewerten. Im Ideallfall sind die beiden "Fingerabdrücke" beispielsweise deckungsgleich, entsprechend einer exakten Übereinstimmung des visuellen Eindrucks der lackierten Metall- und Kunststoffoberfläche. Dies hat große Bedeutung bei der Lackierung von in Mischbauweise aus Kunststoff- und Metallteilen aufgebauten Substraten. Solche Substrate sind beispielsweise auf dem Kraftfahrzeugsektor üblich.

Nachstehend werden Beispiele für Oberflächenerscheinungen angegeben, die mit Hilfe der erfindungsgemäßen Verfahrensweise erfaßt und charakterisiert werden können.

Das erfindungsgemäße Verfahren kann vorteilhaft eingesetzt werden zur Erfassung und Charakterisierung der Mikrostruktur, des Benetzungsverhaltens, des Verlaufs, der Ablaufneigung, des Anlöseverhaltens und des Orangenhauteffekts unter Einsatz von Verfahren zur Bestimmung des langwelligen und/oder kurzwelligen Anteils der Oberflächenstruktur lackierter Oberflächen, insbesondere durch Einsatz des vorstehend erwähnten Meßgeräts Wave-scan^{R}.

Weiterhin kann das erfindungsgemäße Verfahren unter Einsatz farbmetrischer Methoden, insbesondere durch Bestimmung der Helligkeit vorteilhaft genutzt werden zur Erfassung und Charakterisierung der Deckfähigkeit, des Farbtons, des Helligkeitsflops, des Farbflops, der Wolkigkeit, der Spritznebelaufnahme, von Anlöseeffekten und insbesondere im Falle von Effektbasislacken zur Erfassung und Charakterisierung von Ablauferscheinungen.

Das erfindungsgemäße Verfahren wird bevorzugt automatisiert durchgeführt. Beispielsweise können das Meßgerät oder mehrere verschiedene Meßgeräte zugleich, beispielsweise ein Meßgerät für die Glanzmessung, ein Meßgerät zur Bestimmung der Oberflächenstruktur und ein Meßgerät zur Bestimmung der Helligkeit zugleich, von einer automatisch arbeitenden Bewegungseinrichtung entsprechend dem gewünschten Meßgitter über das lackierte Substrat geführt werden. Dies kann beispielsweise unter Verwendung eines an sich üblichen X,Y-Meßtisches realisiert werden. Die aus Meßwerten und diesen zugeordneten, gegebenenfalls wie vorstehend beschrieben korrigierten Dicken der keilförmig lackierten Schicht gebildeten Wertepaare (im Fall der bevorzugten Ausführungsform des erfindungsgemäßen Verfahrens handelt es sich auch (n ≠ m) oder nur (n = m) um Wertetripel der Form: "An der lackierten Kunststoffoberfläche erhaltener optischer Meßwert/an der lackierten Metalloberfläche erhaltener optischer Meßwert/Schichtdicke") können beispielweise in einem angeschlossenen Rechner, z.B. Personalcomputer, gespeichert und anschließend als ein bzw. mehrere Korrelationsdiagramme ausgedruckt werden. Vorteilhaft, zum Beispiel zwecks Durchführung eines bedienerunabhängigen Nachtmeßbetriebes, kann der X,Y-Meßtisch gekoppelt sein mit einem automatischen Probenwechsler, in dem mehrere Substrate gestapelt und diese nacheinander der Messung auf dem X,Y-Meßtisch zugeführt werden. Beispielsweise kann das erfindungsgemäße Verfahren unter Verwendung der aus der DE-C 196 05 520 bekannten Vorrichtung sowie nach der dort beschriebenen Arbeitsweise durchgeführt werden.

Das erfindungsgemäße Verfahren kann mit Erfolg eingesetzt werden und stellt ein wertvolles Werkzeug dar bei der Lackentwicklung, der Qualitätsprüfung im Rahmen der Lackfertigung sowie bei der Entwicklung und Überwachung von Lackierprozessen. Die erhaltenen Korrelationsdiagramme gestatten Voraussagen über die visuelle Wirkung einer unter Verwendung eines definierten Lacks und unter Einhaltung definierter Applikations- und/oder Trocknungsbedingungen hergestellten lackierten Kunststoffoberfläche. Die charakteristische Form der nach dem erfindungsgemäßen Verfahren erhaltenen Korrelationsdiagramme erlaubt es einen Trend hinsichtlich der Veränderung der visuellen Wirkung einer lackierten Kunststoffoberfläche in Abhängigkeit von der Schichtdicke einer betreffenden Lackschicht abzuleiten.

Das erfindungsgemäße Verfahren liefert eine gute Korrelation mit dem visuellen Eindruck einer lackierten Kunststoffoberfläche bzw. im Fall der bevorzugten Ausführungsform des erfindungsgemäßen Verfahrens mit dem visuellen Eindruck einer lackierten Oberfläche eines in Mischbauweise aus Kunststoff- und Metallteilen aufgebauten Substrats, wie ihn das menschliche Auge wahrnimmt. Es läßt sich mit wenig Lack und mit einem einzigen gemäß den Erfordernissen des erfindungsgemäßen Verfahrens zusammengesetzten Substrat rationell und schnell durchführen.

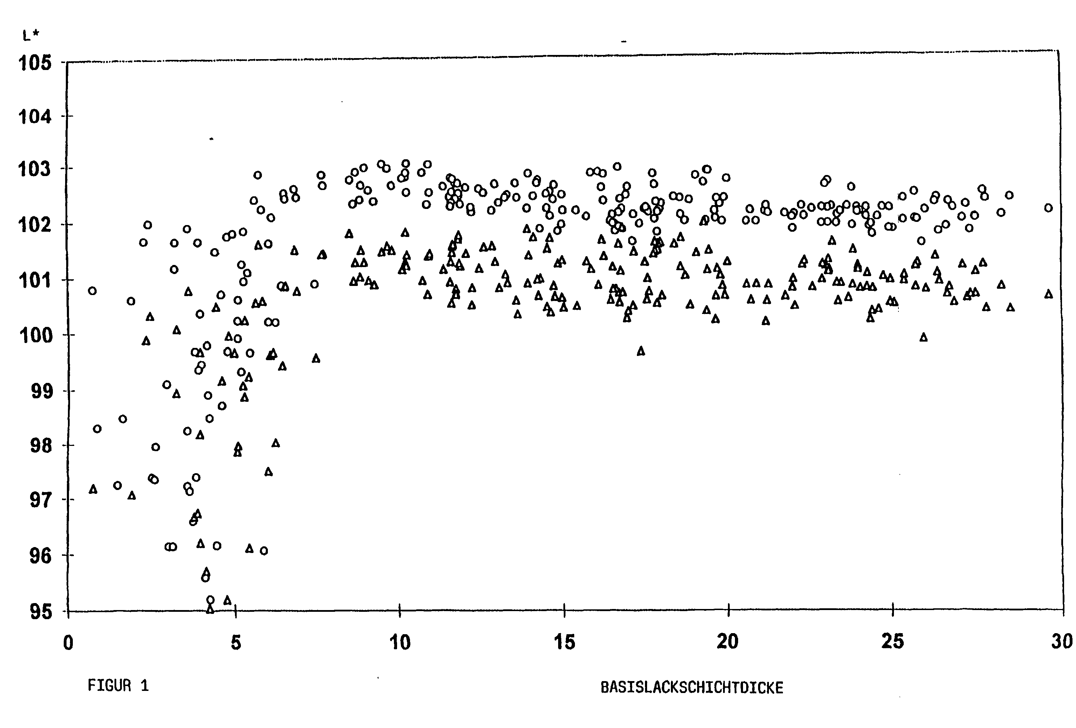

In der beigefügten **Figur 1** ist ein Beipiel für ein nach dem erfindungsgemäßen Verfahren erhaltenes Helligkeit/Basislackschichtdicke-Korrelationsdiagramm einer Effektbasislack/Klarlack-Zweischichtlackierung gezeigt. Das Diagramm wurde wie im folgenden beschrieben erhalten:

Zunächst wurde ein Substrat hergestellt, indem eine unbeschichtete rechteckige Probeplatte aus Polycarbonat (Abmessungen 150 mm mal 600 mm) mittels doppelseitigem Klebeband auf eine mit üblicher kathodischer Tauchlackschicht und Füllerschicht vorbeschichtete Probeplatte aus Stahl der Abmessungen 300 mm mal 600 mm aufgeklebt wurde, wobei eine der 600 mm langen Kanten der Probeplatte aus Kunststoff bündig mit einer der 600 mm langen Kanten der Probeplatte aus Stahl abschloß. Das so erhaltene, senkrecht stehende Gesamtsubstrat aus Kunststoff- und Stahlplatte (600 mm lange Kante dabei vertikal) wurde mittels eines üblichen Spritzlackierautomaten (wie in EP-B-0 350 891 beschrieben) mit einem silberfarbenen Effektbasislack auf Basis organischer Lösemittel mit einem Schichtdickegradienten von 0 bis 30 µm Trockenschichtdicke (höchste Basislackschichtdicke am erdnäheren Ende des Substrats) beschichtet. Nach fünfminütigem Ablüften bei Raumtemperatur wurde ein handelsüblicher Zweikomponenten-Polyurethan-Klarlack in einer Trockenschichtdicke von 40 µm mittels des gleichen Spritzlackierautomaten aufgetragen und gemeinsam mit der Basislackschicht 30 Minuten bei 80°C (Ofentemperatur) getrocknet. Die Helligkeit wurde sowohl an der lackierten Kunststoffoberfläche als auch an der lackierten Stahloberfläche des Substrats mit dem Gerät Micrometallic^{R} der Firma BYK-Gardner in Abhängigkeit von der Basislackschichtdicke mit einem Beleuchtungswinkel von 45 Grad und einem Beobachtungswinkel von 25 Grad zum Glanzreflex gitterartig gemessen. Dabei lagen Beleuchtungs- und Beobachtungsrichtung quer zum Basislackkeil. An jeweils zu den Helligkeitsmessungen korrespondierenden Positionen wurde die Basislackschichtdicke magnetisch-induktiv ausschließlich an der lackierten Stahloberfläche des Substrats bestimmt.

Aus dem Korrelationsdiagramm, dessen Ordinate die Helligkeit (L*, gemäß CIELAB-System) und dessen Abzisse die Basislackschichtdicke in µm angibt, läßt sich folgendes ablesen: Der für die lackierte Kunststoffoberfläche erhaltene "Fingerabdruck" (Dreiecksymbole) ähnelt dem der für die lackierte Stahloberfläche erhaltenen (Kreissymbole) von der Form her, liegt aber vom Gesamtniveau her niedriger als Folge des auf dem Kunststoffuntergrund und auf dem Stahluntergrund unterschiedlichen Abdunstverhaltens des Basislacks.

## Patentansprüche

1. Verfahren zur Bestimmung der visuellen Wirkung von Lackierungen auf Kunststoffoberflächen, wobei eine oder mehrere aufeinanderfolgende Lackschichten jeweils auf die gesamte Oberfläche eines aus einer mit einer Probeplatte aus ferromagnetischem Metall verbundenen Probeplatte aus Kunststoff bestehenden Substrats appliziert und getrocknet oder gehärtet werden, wobei die beiden Probeplatten in einer eine gemeinsame Ebene oder parallel zueinander angeordnete, gegebenenfalls einander teilweise verdeckende Ebenen ausbildenden Weise miteinander verbunden sind, eine der Lackschichten in Form eines Keils mit einem Schichtdickegradienten appliziert wird, und auf der so erhaltenen lackierten Substratoberfläche zumindest an der Probeplatte aus Kunststoff anschließend an vollflächig in Form eines gitterförmigen Rasters verteilten Messpunkten jeweils eine oder mehrere den visuellen Eindruck beeinflussende Oberflächeneigenschaften mittels eines oder mehrerer optischer Messverfahren, sowie ausschließlich an der Probeplatte aus ferromagnetischem Metall die jeweilige Dicke der keilförmigen Lackschicht mittels üblicher magnetischer oder magnetisch-induktiv arbeitender Verfahren vermessen werden.

2. Verfahren nach Anspruch 1, wobei sowohl an der Probeplatte aus Kunststoff als auch an der Probeplatte aus ferromagnetischem Metall an jeweils vollflächig in Form eines gitterförmigen Rasters verteilten Messpunkten jeweils eine oder mehrere den visuellen Eindruck beeinflussende Oberflächeneigenschaften vermessen werden.

3. Verfahren nach einem der vorhergehenden Ansprüche, wobei die Probeplatte aus ferromagnetischem Metall und die Probeplatte aus Kunststoff jeweils rechteckig und über ihre Kanten oder Rückseiten miteinander verbunden sind.

4. Verfahren nach einem der vorhergehenden Ansprüche, wobei die Verbindung der Probeplatten unter Verwendung von Klebeband an den nicht zu beschichlenden Rückseiten oder bei überlappender Verbindung durch Aufkleben einer Probeplatte auf die andere unter Verwendung von doppelseitigem Klebeband erfolgt.

5. Verfahren nach einer der vorhergehenden Ansprüche, wobei die erhaltenen Messpunkte in ein oder mehrere Korrelationsdiagramme von Schichtdicke und dem jeweils zugehörigen bzw. äquivalenten optischen Messpunkt eingetragen werden.

6. Verfahren nach Anspruch 5, wobei die Erstellung des Korrelationsdiagramms im Anschluss an die jeweilige Messung automatisch über einen Rechner erfolgt.

7. Verfahren nach Anspruch 5 oder 6, wobei die Erstellten Korrelationsdiagramme als Fingerabdruck einer speziellen Lackierung verwendet werden.

## Claims

1. Method of determining the visual effect of lacquer coatings on plastics surfaces, wherein one or more consecutive lacquer films are each applied on to the entire surface of a substrate consisting of a test plate made of plastic bonded to a test plate made of ferromagnetic metal and dried or cured, the two test plates being bonded together in a manner forming a common plane or planes arranged parallel to one another, optionally partly overlapping one another, one of the lacquer films is applied in a wedge shape with a film thickness gradient and on the lacquered substrate surface thus obtained, at least on the plastics test plate, one or more surface properties influencing the visual effect are then measured in each case at measuring points distributed over the entire surface in the form of a lattice-shaped grid, using one or more optical measuring methods, and exclusively on the test plate made of ferromagnetic metal, the thickness of the wedge-shaped lacquer film is measured by conventional magnetic or magnetic inductive methods.

2. Method according to claim 1, wherein, both on the test plate made of plastic and on the test plate made of ferromagnetic metal, one or more surface properties influencing the visual effect are measured in each case at measuring points distributed over the entire surface of each in the form of a lattice-shaped grid.

3. Method according to one of the above claims, wherein the test plate made of ferromagnetic metal and the test plate made of plastic are each rectangular and are bonded together over their edges or reverse sides.

4. Method according to one of the above claims, wherein the bonding of the test plates takes place using adhesive tape on the reverse sides that are not to be coated or, in the case of an overlapping bond, by sticking one test plate on to the other using double-sided adhesive tape.

5. Method according to one of the above claims, wherein the measuring points obtained are recorded in one or more correlation diagrams of film thickness and the corresponding or equivalent optical measuring point in each case.

6. Method according to claim 5, wherein the correlation diagram is drawn automatically using a computer after the respective measurement.

7. Method according to claim 5 or 6, wherein the correlation diagrams drawn are used as a fingerprint of a special lacquer coating.

## Revendications

1. Procédé permettant de déterminer l'effet visuel de peintures sur des surfaces en matière plastique, où une ou plusieurs couches de peinture successives sont respectivement appliquées et séchées ou durcies sur toute la surface d'un substrat se composant d'une plaque d'essai en matière plastique assemblée avec une plaque d'essai en métal ferromagnétique, les deux plaques d'essai étant assemblées l'une avec l'autre d'une manière formant un plan commun ou des plans disposés parallèlement l'un à l'autre, le cas échéant se chevauchant partiellement l'un l'autre, l'une des couches de peinture étant appliquée sous la forme d'un coin ayant un gradient d'épaisseur de couche et, sur la surface de substrat peinte ainsi obtenue, au moins sur la plaque d'essai en matière plastique, une ou plusieurs qualités de surface influençant l'impression visuelle sont mesurées ensuite respectivement sur des points de mesure répartis sur toute la surface, sous la forme d'une trame en réseau, au moyen d'un ou de plusieurs procédés de mesure optiques, de même que l'épaisseur respective de la couche de peinture en forme de coin, exclusivement sur la plaque d'essai en métal ferromagnétique, est mesurée au moyen de procédés magnétiques habituels ou fonctionnant de façon magnéto-inductive.

2. Procédé selon la revendication 1 où, aussi bien sur la plaque d'essai en matière plastique que sur la plaque d'essai en métal ferromagnétique, une ou plusieurs qualités de surface influençant l'impression visuelle sont mesurées respectivement sur des points de mesure répartis à chaque fois sur toute la surface, sous la forme d'une trame en réseau.

3. Procédé selon l'une des revendications précédentes où la plaque d'essai en métal ferromagnétique et la plaque d'essai en matière plastique sont assemblées l'une avec l'autre, à chaque fois de façon rectangulaire et par leurs bords ou par leurs faces arrière.

4. Procédé selon l'une quelconque des revendications précédentes où l'assemblage des plaques d'essai est réalisé en utilisant une bande adhésive appliquée sur les faces arrière ne devant pas être enduites, ou bien par un assemblage à chevauchement obtenu en collant une plaque d'essai sur l'autre plaque d'essai, en utilisant une bande adhésive à double face.

5. Procédé selon l'une quelconque des revendications précédentes où les points de mesure obtenus sont enregistrés dans un ou plusieurs diagrammes de corrélation d'épaisseur de couche et dans le point de mesure optique respectivement associé ou équivalent.

6. Procédé selon la revendication 5 où l'établissement du diagramme de corrélation est réalisé automatiquement par un ordinateur, suite à la mesure respective.

7. Procédé selon la revendication 5 ou 6 où les diagrammes de corrélation établis sont utilisés comme empreinte digitale d'une peinture spéciale.
